(19) Europäisches Patentamt
European Patent Office
Office européen des brevets

(11) **EP 3 054 447 A1**

(12) **EUROPEAN PATENT APPLICATION**
published in accordance with Art. 153(4) EPC

(43) Date of publication:
**10.08.2016 Bulletin 2016/32**

(51) Int Cl.:
***G10L 25/60*** (2013.01)

(21) Application number: **14849044.4**

(22) Date of filing: **05.05.2014**

(86) International application number:
**PCT/CN2014/076779**

(87) International publication number:
**WO 2015/043184 (02.04.2015 Gazette 2015/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **30.09.2013 CN 201310462268**

(71) Applicant: **Huawei Technologies Co. Ltd.
Shenzhen, Guangdong 518129 (CN)**

(72) Inventor: **XIAO, Wei
Shenzhen
Guangdong 518129 (CN)**

(74) Representative: **Maiwald Patentanwalts GmbH
Engineering
Elisenhof
Elisenstrasse 3
80335 München (DE)**

(54) **VOICE QUALITY EVALUATION METHOD AND APPARATUS**

(57) The present invention discloses a voice quality evaluation method and apparatus, where the method includes: determining a first voice quality of a to-be-evaluated voice signal by performing processing and an analysis on the to-be-evaluated voice signal, where the first voice quality includes a quality distortion value and/or a MOS value; and determining a voice quality evaluation result of the to-be-evaluated voice signal according to the first voice quality and at least one key performance indicator KPI parameter of a transmission channel of the to-be-evaluated voice signal. According to the voice quality evaluation method and apparatus in embodiments of the present invention, a voice quality of the to-be-evaluated voice signal is determined by using the to-be-evaluated voice signal and the KPI parameter of the transmission channel of the to-be-evaluated voice signal, which can improve accuracy of voice quality evaluation, thereby further improving user experience.

Determine a first voice quality of a to-be-evaluated voice signal by performing processing and an analysis on the to-be-evaluated voice signal, where the first voice quality includes a quality distortion value and/or a mean opinion score MOS value — 110

Determine a voice quality evaluation result of the to-be-evaluated voice signal according to the first voice quality and at least one key performance indicator KPI parameter of a transmission channel of the to-be-evaluated voice signal — 120

FIG. 1

## Description

This application claims priority to Chinese Patent Application No. CN201310462268.2, filed with the Chinese Patent Office on September 30, 2013 and entitled "VOICE QUALITY EVALUATION METHOD AND APPARATUS", which is incorporated herein by reference in its entirety.

## TECHNICAL FIELD

Embodiments of the present invention relate to the field of audio technologies, and more specifically, to a voice quality evaluation method and apparatus.

## BACKGROUND

In the field of audio technology researches, there are mainly two methods for evaluating voice quality: subjective evaluation and objective evaluation. In the subjective evaluation method, some testers are organized to listen to and test a series of audio sequences by complying with criteria in the industry (for example, ITU-T P.800); finally, statistics on voice quality evaluation results from the testers are collected to obtain an average trend of the evaluation results. Generally, a final voice quality evaluation result is indicated by a mean opinion score (Mean Opinion Score, "MOS" for short), and a higher MOS value indicates better voice quality. However, there are disadvantages including a long experimental cycle and a high economic cost in the subjective evaluation method. It is difficult to organize subjective tests in batches in a middle phase of an audio algorithm research. Therefore, the objective evaluation method is widely used in evaluating voice quality. The present invention provides an objective voice quality evaluation method, which can improve accuracy of voice quality evaluation.

## SUMMARY

Embodiments of the present invention provide a voice quality evaluation method and apparatus, which can improve accuracy of voice quality evaluation.

According to a first aspect, a voice quality evaluation method is provided, where the method includes: determining a first voice quality of a to-be-evaluated voice signal by performing processing and an analysis on the to-be-evaluated voice signal, where the first voice quality includes a quality distortion value and/or a MOS value; and determining a voice quality evaluation result of the to-be-evaluated voice signal according to the first voice quality and at least one key performance indicator KPI parameter of a transmission channel of the to-be-evaluated voice signal.

With reference to the first aspect, in a first possible implementation manner, the determining a voice quality evaluation result of the to-be-evaluated voice signal according to the first voice quality and at least one KPI parameter of a transmission channel of the to-be-evaluated voice signal includes: determining at least one second voice quality of the to-be-evaluated voice signal according to the at least one KPI parameter of the transmission channel of the to-be-evaluated voice signal; and determining the voice quality evaluation result of the to-be-evaluated voice signal according to the first voice quality, the at least one second voice quality, and a voice quality evaluation function obtained by using a regression analysis training method, where the voice quality evaluation function uses the first voice quality and the at least one second voice quality as inputs and uses the voice quality evaluation result as an output.

With reference to the first possible implementation manner of the first aspect, in a second possible implementation manner, the voice quality evaluation function has the following form: $Y = B_{1 \times N} \times X_{N \times 1} + t$, where Y is the voice quality evaluation result, $B_{1 \times N}$ and t are respectively a constant matrix and a constant, and $X_{N \times 1} = [x_{00} \ldots x_{i0} \ldots x_{N0}]^T$ is a quality distortion matrix, where the element $x_{00}$ is a quality distortion value obtained according to a signal domain evaluation method, the element $x_{i0}$ is a quality distortion value obtained according to the KPI parameter of the transmission channel, and $1 \leq i \leq N$.

With reference to the first aspect, in a third possible implementation manner, the determining a voice quality evaluation result of the to-be-evaluated voice signal according to the first voice quality and at least one KPI parameter of a transmission channel of the to-be-evaluated voice signal includes: inputting the first voice quality and the at least one KPI parameter of the transmission channel into a learning network obtained by using a machine learning training method, to obtain the voice quality evaluation result of the to-be-evaluated voice signal that is output by using the learning network.

With reference to the first aspect or any one of the first to third possible implementation manners of the first aspect, in a fourth possible implementation manner, a quantity of the at least one KPI parameter of the transmission channel is more than one; and the method further includes: determining a weight of influence of each of the at least one KPI parameter in the at least one KPI parameter on a voice quality of the to-be-evaluated voice signal according to the first voice quality and the at least one KPI parameter of the transmission channel; and when the voice quality evaluation result is lower than a preset threshold, optimizing the transmission channel of the to-be-evaluated voice signal according to the weight of influence of each KPI parameter on the voice quality.

With reference to the fourth possible implementation manner of the first aspect, in a fifth possible implementation manner, the optimizing the transmission channel of the to-be-evaluated voice signal according to the weight of influence of each KPI parameter on the voice quality includes: sorting products according to values of the products, where the products are obtained by respectively multiplying the weights of influence of all the KPI parameters by quality distortion values corresponding to the KPI parameters; and preferentially optimizing a KPI parameter in the at least one KPI parameter that has a large value of a product in the sorted products.

According to a second aspect, a voice quality evaluation apparatus is provided, where the apparatus includes: a first determining module, configured to determine a first voice quality of a to-be-evaluated voice signal by performing processing and an analysis on the to-be-evaluated voice signal, where the first voice quality includes a quality distortion value and/or a MOS value; and a second determining module, configured to determine a voice quality evaluation result of the to-be-evaluated voice signal according to the first voice quality determined by the first determining module and at least one key performance indicator KPI parameter of a transmission channel of the to-be-evaluated voice signal.

With reference to the second aspect, in a first possible implementation manner, the second determining module includes: a first determining unit, configured to determine at least one second voice quality of the to-be-evaluated voice signal according to the at least one KPI parameter of the transmission channel of the to-be-evaluated voice signal; and a second determining unit, configured to determine the voice quality evaluation result of the to-be-evaluated voice signal according to the first voice quality determined by the first determining module, the at least one second voice quality determined by the first determining unit, and a voice quality evaluation function obtained by using a regression analysis training method, where the voice quality evaluation function uses the first voice quality and the at least one second voice quality as inputs and uses the voice quality evaluation result as an output.

With reference to the first possible implementation manner of the second aspect, in a second possible implementation manner, the voice quality evaluation function has the following form: $Y = B_{1xN} \times X_{Nx1} + t$, where Y is the voice quality evaluation result, $B_{1xN}$ and t are respectively a constant matrix and a constant, and $X_{Nx1} = [x_{00} \dots x_{i0} \dots x_{N0}]^T$ is a quality distortion matrix, where the element $x_{00}$ is a quality distortion value obtained according to a signal domain evaluation method, the element $x_{i0}$ is a quality distortion value obtained according to the KPI parameter of the transmission channel, and $1 \leq i \leq N$.

With reference to the second aspect, in a third possible implementation manner, the second determining module is specifically configured to input the first voice quality and the at least one KPI parameter of the transmission channel into a learning network obtained by using a machine learning training method, to obtain the voice quality evaluation result of the to-be-evaluated voice signal that is output by using the learning network.

With reference to the second aspect or any one of the first to third possible implementation manners of the second aspect, in a fourth possible implementation manner, a quantity of the at least one KPI parameter of the transmission channel is more than one; and the apparatus further includes: a third determining module, configured to separately determine a weight of influence of each KPI parameter in the at least one KPI parameter on a voice quality of the to-be-evaluated voice signal according to the first voice quality determined by the first determining module and the at least one KPI parameter of the transmission channel; and a channel optimizing module, configured to: when the voice quality evaluation results determined by the second determining module is lower than a preset threshold, optimize the transmission channel of the to-be-evaluated voice signal according to the weight of influence, of each KPI parameter that is determined by the third determining module on the voice quality.

With reference to the fourth possible implementation manner of the second aspect, in a fifth possible implementation manner, the channel optimizing module includes: a sorting unit, configured to sort products according to values of the products, where the products are obtained by respectively multiplying the weights of influence of all the KPI parameters by quality distortion values corresponding to the KPI parameters; and an optimizing unit, configured to preferentially optimize a KPI parameter in the at least one KPI parameter that has a large value of a product in the products sorted by the sorting unit.

Based on the foregoing technical solutions, according to the voice quality evaluation method and apparatus in the embodiments of the present invention, a voice quality of a to-be-evaluated voice signal is determined by using the to-be-evaluated voice signal and a KPI parameter of a transmission channel of the to-be-evaluated voice signal, which can improve accuracy of voice quality evaluation, thereby further improving user experience.

**BRIEF DESCRIPTION OF DRAWINGS**

To describe the technical solutions in the embodiments of the present invention more clearly, the following briefly introduces the accompanying drawings required for describing the embodiments of the present invention or the prior art. Apparently, the accompanying drawings in the following description show merely some embodiments of the present invention, and a person of ordinary skill in the art may still derive other drawings from these accompanying drawings without creative efforts.

FIG. 1 is a schematic flowchart of a voice quality evaluation method according to an embodiment of the present invention;

FIG. 2 is a schematic diagram of a voice quality evaluation method according to an embodiments of the present invention;

FIG. 3 is another schematic diagram of a voice quality evaluation method according to an embodiment of the present invention;

FIG. 4 is another schematic flowchart of a voice quality evaluation method according to an embodiment of the present invention;

FIG. 5 is still another schematic diagram of a voice quality evaluation method according to an embodiment of the present invention;

FIG. 6 is still another schematic flowchart of a voice quality evaluation method according to an embodiment of the present invention;

FIG. 7 is a schematic block diagram of a voice quality evaluation apparatus according to an embodiment of the present invention;

FIG. 8 is a schematic block diagram of a second determining module of a voice quality evaluation apparatus according to an embodiment of the present invention;

FIG. 9 is another schematic block diagram of a voice quality evaluation apparatus according to an embodiment of the present invention; and

FIG. 10 is a schematic block diagram of a voice quality evaluation apparatus according to another embodiment of the present invention.

## DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

A voice quality evaluation method according to embodiments of the present invention can be applied in various scenarios, for example, the voice quality evaluation method according to the embodiments of the present invention is applied to a mobile phone to evaluate a voice quality of an actual call. Specifically, for a mobile phone on one side of the call, a bitstream received by the mobile phone may be decoded, to obtain a voice file by reconstruction. The voice file can be used as a to-be-evaluated voice signal in the embodiments of the present invention and a first voice quality of the voice signal received by the mobile phone can be obtained. Then a voice quality evaluation result of the voice signal can be obtained by collecting a key performance indicator (Key performance indicator, "KPI" for short) parameter during a process of the call, and the evaluation result can basically reflect a quality of a voice actually heard by a user.

In addition, generally, before being transmitted to a receiving party, voice data needs to pass through several nodes on a network. Due to impact of some factors, after being transmitted over the network, the voice quality probably deteriorates. therefore, detection of a voice quality of each node on a network side is of great significance. However, many existing methods reflect more about a quality at a transmission layer, which does not correspond one to one to a true reeling of a person. Therefore, the technical solutions according to the embodiments of the present invention may be applied to each network node to synchronously perform a quality prediction on a voice signal, to find out a quality bottleneck. For example, for any network node, a specific decoder may be selected by analyzing a data stream, to perform local decoding on the bitstream and obtain a voice file by reconstruction. The voice file is used as a to-be-evaluated voice signal in the embodiments of the present invention and a first voice quality of the voice signal received by the node can be obtained. Then a voice quality evaluation result of the voice signal can be obtained by collecting a KPI parameter of a transmission channel; and a node whose transmission quality needs to be improved can be located by comparing and analyzing voice quality evaluation results of different nodes. Therefore, this application can play an important role in assisting an operator with network optimization.

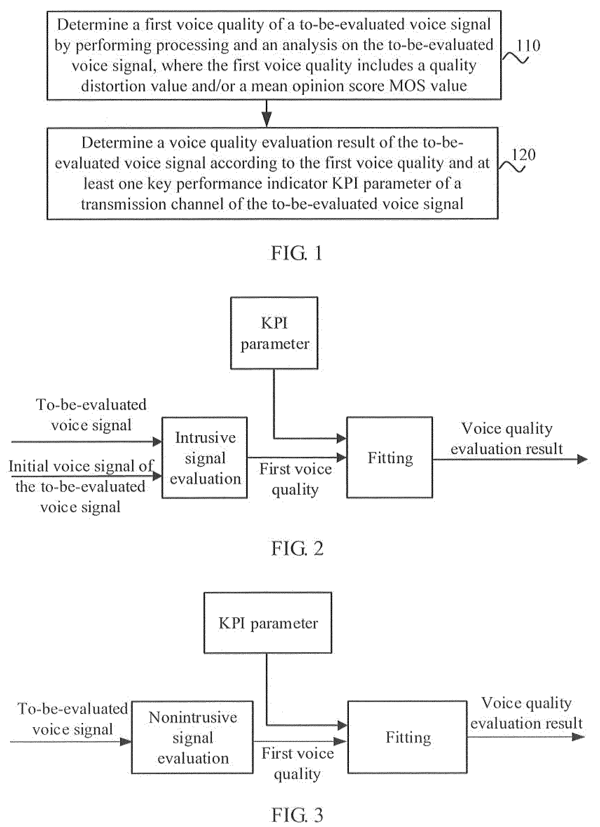

FIG. 1 shows a schematic flowchart of a voice quality evaluation method 100 according to an embodiment of the present invention, where the method may be executed by a voice quality evaluation apparatus. As shown in FIG. 1, the method includes the following steps:

S110: Determine a first voice quality of a to-be-evaluated voice signal by performing processing and an analysis on the to-be-evaluated voice signal, where the first voice quality includes a quality distortion value and/or a MOS value.
S120: Determine a voice quality evaluation result of the to-be-evaluated voice signal according to the first voice quality and at least one key performance indicator KPI parameter of a transmission channel of the to-be-evaluated voice signal.

Therefore, according to the voice quality evaluation method in this embodiment of the present invention, a voice quality of a to-be-evaluated voice signal is determined by using the to-be-evaluated voice signal and a KPI parameter of a transmission channel of the to-be-evaluated voice signal, which can improve accuracy of voice quality evaluation, thereby further improving user experience.

In S110, an analysis and processing may be performed on the to-be-evaluated voice signal by using a signal domain evaluation method, to obtain the first voice quality of the to-be-evaluated voice signal. Optionally, the signal domain evaluation method may be an intrusive signal evaluation method, for example, PESQ or ITU-T P.863, or may be a non-intrusive signal evaluation method, for example, ITU-T P.563, ANIQUE+, or ANIQUE. As shown in FIG. 2, in the intrusive signal evaluation method, the voice quality evaluation apparatus may further acquire an initial voice signal of the to-be-evaluated voice signal, and perform an analysis and processing on the initial voice signal and the to-be-evaluated voice signal, to obtain the first voice quality. However, in the non-intrusive signal evaluation method shown in FIG. 3, the voice quality evaluation apparatus does not consider the initial voice signal of the to-be-evaluated voice signal, but only perform an analysis and processing on the to-be-evaluated voice signal, to obtain the first voice quality. Therefore, when the non-intrusive evaluation method is used in the voice quality evaluation apparatus, the voice quality evaluation method in this embodiment of the present invention may be used to perform real-time evaluation on a quality of a voice signal. However, this embodiment of the present invention is not limited thereto.

The voice quality evaluation apparatus may perform an analysis and processing on the first voice quality obtained in FIG. 2 and FIG. 3 and the KPI parameter of the transmission channel of the to-be-evaluated voice signal, to obtain a second voice quality of the to-be-evaluated voice signal, that is, the voice quality evaluation result of the to-be-evaluated voice signal. However, this embodiment of the present invention is not limited thereto.

In this embodiment of the present invention, the voice quality evaluation result may be indicated by a MOS value, and the first voice quality may be a quality distortion value or a first MOS value. Optionally, a relationship between the quality distortion value and the first MOS value that arc obtained according to the signal domain evaluation method may be indicated by the following formula: $D = (MOS_m - MOS_0)/(MOS_m - 1)$, where $MOS_0$ indicates the first MOS value obtained according to the signal domain evaluation method, $MOS_m$ indicates a largest MOS value that can be reached by a specific coder, where $MOS_m$ may be set to 5, or may be set to the largest MOS value that can be reached by the specific coder. However, this embodiment of the present invention is not limited thereto. Table 1 lists largest data rates that can be reached by some typical coders and corresponding MOS values. However, this embodiment of the present invention is not limited to the coders described in Table 1 and the MOS values corresponding to the coders listed in Table 1.

**Table 1 Largest data rates of typical coders and corresponding MOS values**

| Coder | Data rate [kbit/s] | MOS |
| --- | --- | --- |
| AMR | 12.2 | 4.14 |
| G.711 (ISDN) | 64 | 4.1 |
| G.723.1 r53 | 5.3 | 3.65 |
| G.723.1 r63 | 6.3 | 3.9 |
| G.726 ADPCM | 32 | 3.85 |
| G.728 | 16 | 3.61 |
| G.729 | 8 | 3.92 |
| G.729a | 8 | 3.7 |
| GSM EFR | 12.2 | 3.8 |
| GSM FR | 12.2 | 3.5 |
| iLBC | 15.2 | 4.14 |

In Sk120, the voice quality evaluation apparatus may use the first voice quality and the at least one KPI parameter of the transmission channel as input parameters and substitute the input parameters into a function expression obtained by performing training on a training sample set by using a training method, such as a regression analysis training method or a machine learning training method, to obtain the voice quality evaluation result of the to-be-evaluated voice signal. A quantity of the at least one KPI parameter of the transmission channel may be one or more. Optionally, the training sample set may include multiple known data samples, and each data sample may include the quality distortion value and/or the MOS value of the voice signal that is obtained by using the signal, domain evaluation method, the at least one KPI parameter of the transmission channel of the voice signal, a quality distortion value and/or a MOS value that are separately predicted according to the at least one KPI parameter, and subjective voice evaluation quality of the voice signal. However, this embodiment of the present invention is not limited thereto. Alternatively, the voice quality evaluation apparatus may first obtain the second voice quality of the to-be-evaluated voice signal according to the KPI parameter, and then use the first voice quality and the second voice quality as input parameters and substitute the input parameters into a function expression obtained by using a training method, to obtain the voice quality evaluation result of the to-be-evaluated voice signal. However, this embodiment of the present invention is not limited thereto.

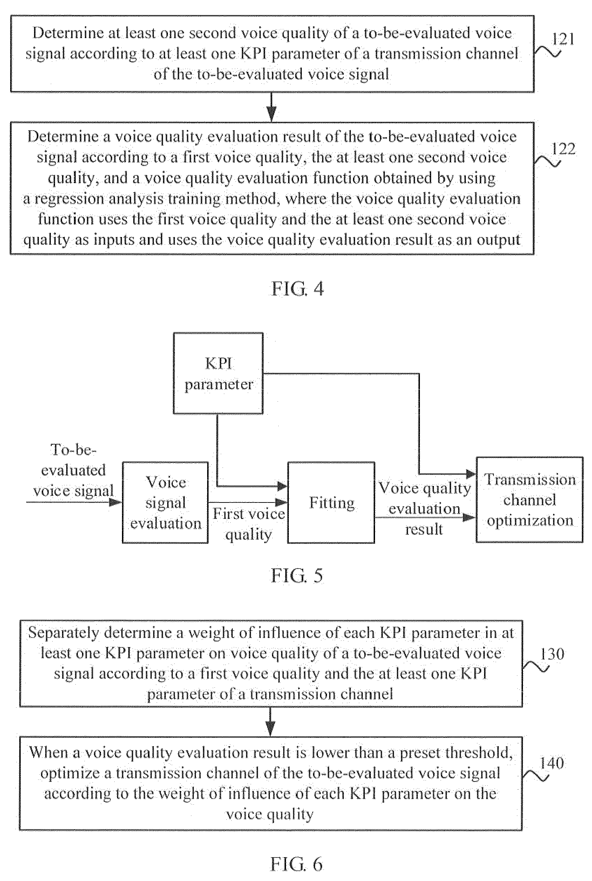

Optionally, as shown in FIG. 4, the determining a voice quality evaluation result of the to-be-evaluated voice signal according to the first voice quality and at least one KPI parameter of a transmission channel of the to-be-evaluated voice signal in S120 includes the following steps:

S121: Determine at least one second voice quality of the to-be-evaluated voice signal according to the at least one KPI parameter of the transmission channel of the to-be-evaluated voice signal.

S122: Determine the voice quality evaluation result of the to-be-evaluated voice signal according to the first voice quality, the at least one second voice quality, and a voice quality evaluation function obtained by using a regression analysis training method, where the voice quality evaluation function uses the first voice quality and the at least one second voice quality as inputs and uses the voice quality evaluation result as an output.

The at least one KPI parameter may be at least one of the following parameters: a coder type, a code rate, a packet loss rate, and a delay variation.

Optionally, the voice quality evaluation apparatus can separately obtain one second voice quality according to each KPI parameter in the at least one KPI parameter, or obtain one second voice quality according to multiple KPI parameters in the at least one KPI parameter. The second voice quality may be the quality distortion value or the MOS value; however, this embodiment of the present invention is not limited thereto.

Optionally, the first voice quality and the second voice quality may be both quality distortion values of the voice signal. The voice quality evaluation apparatus may construct the voice quality evaluation function that uses the first voice quality and the second voice quality as input parameters and uses the voice quality evaluation result as an output parameter, and substitute the sample data in the training sample set into the function to perform fitting on a constant in the function, to obtain an expression of the voice quality evaluation function. However, this embodiment of the present invention is not limited thereto. Each piece of sample data in the training sample set may include a subjective MOS value of the voice signal, a MOS value of the voice signal that is obtained by using the signal domain evaluation method, and a KPI parameter of the voice signal. The voice quality evaluation apparatus may first obtain quality distortion corresponding to the KPI parameter, for example, the largest data rates of the typical coders and the corresponding MOS values listed in Table 1. However, it should be noted that, the foregoing result is merely exemplary, and cannot be considered as a limitation to the present invention. Specifically, a quality distortion value $D_1$ corresponding to the code rate may be determined by the following formula: $D_1 = a_1 \times \exp(-t_1 \times c)$, where $a_1$ and $t_1$ are fitting constants, and c is the code rate; a quality distortion value $D_2$ corresponding to the packet loss rate may be determined by the following formula: $D_2 = a_2 \times m^{t_2}$, where $a_2$ and $t_2$ arc fitting constants, and m is the packet loss rate; a quality distortion value $D_3$ corresponding to the delay variation may be determined by the following formula: $D_3 = a_3 \times r^{t_3}$, where $a_3$ and $t_3$ are fitting constants, and r is the delay variation. Optionally, the quality distortion or the MOS value corresponding to the foregoing KPI parameter may also be determined by using another expression, which is not limited thereto in this embodiment of the present invention.

Optionally, the voice quality evaluation function has the following form:

$$Y = B_{1 \times N} \times X_{N \times 1} + t \qquad (1)$$

Y is the voice quality evaluation result, $B_{1 \times N}$ and t are respectively a constant matrix and a constant, and $X_{N \times 1} = [x_{00} \dots x_{i0} \dots x_{N0}]^T$ is a quality distortion matrix, the element $x_{00}$ in line 0 of $X_{N \times 1}$ is a quality distortion value obtained according to the signal domain evaluation method, $x_{10}$ to $x_{N0}$ in line 1 to line N are respectively quality distortion values obtained according to different KPI parameters. For example, line 1 is a quality distortion value obtained according to the packet loss rate, and line 2 is a quality distortion rate obtained according to the code rate. The constant matrix $B_{1 \times N}$ and the constant t may be obtained by means of fitting by substituting the sample data in the training sample set into the formula (1). However, this embodiment of the present invention is not limited thereto.

That the voice quality evaluation apparatus uses the ITU-T P.563, the coder is AMR-NB, and the at least one KPI parameter includes a code rate and a packet loss rate is used as an example. The voice quality evaluation apparatus may obtain a quality distortion value of a voice signal in the sample data by using the ITU-T P.563, obtain the quality

distortion value $D_1$ = 1.425 x exp(-0.0932 x c) of the voice signal according to the code rate, obtain the quality distortion $D_2$ = 1.389 x $m^{0.2098}$ of the voice signal according to the packet loss rate, and then substitute the separately obtained quality distortion values into the foregoing voice quality evaluation function to obtain a voice quality evaluation function with the following form:

$$Y = 4.0589 + 0.3759 \times d_1 + 0.5244 \times d_2 + 0.1183 \times m_0 \qquad (2)$$

$d_1$ and $d_2$ are the quality distortion values respectively corresponding to the code rate and the packet loss rate, $m_0$ is the quality distortion value predicted by using the ITU-T P.563. Table 2 lists voice quality evaluation results obtained by performing evaluation on a voice quality of an actual to-be-evaluated voice signal according to the formula (2). The voice quality evaluation method in this embodiment of the present invention is referred to as a "hybrid model", "P.563" refers to a pure ITU-T P.563, RMSE refers to a root mean square error of a predicted MOS value, and R refers to a Pearson correlation coefficient (Pearson Correlation Coefficient) between the predicted MOS value and the subjective MOS value that are of the voice signal, where a larger value of R indicates that an objective model can more accurately reflect subjective experience. According to a definition in the ITU-T P.1401 standard, the value of R may be determined by the following formula:

$$R = \frac{\sum_{i=1}^{N}(X_i - \overline{X}) \times (Y_i - \overline{Y})}{\sqrt{\sum_{i=1}^{N}(X_i - \overline{X})^2} \times \sqrt{\sum_{i=1}^{N}(Y_i - \overline{Y})^2}} \qquad (3)$$

N is a quantity of samples of voice signals, and $X_i$ and $Y_i$ are respectively a subjective MOS value of the $i^{th}$ voice signal and a MOS value of the $i^{th}$ voice signal. that is predicted by the objective model, and correspondingly, $\overline{X}$ and $\overline{Y}$ are respectively an average value of subjective MOS values of the N voice signal and an average value of MOS values predicted by the objective models. It may be learned from Table 2 that, an R value obtained by using the hybrid model based on the regression analysis training method is greater than an R value obtained by using the ITU- T P.563, but a root mean square error of the predicted results is less than a root mean square error in the ITU-T P.563. Therefore, the predicted results of the hybrid model based on the regression analysis training method are apparently better than those in the pure signal domain evaluation method. However, it should be understood that, this embodiment of the present invention may also use another signal domain prediction method and another KPI parameter, which are not limited thereto in this embodiment of the present invention.

**Table 2 Predicted results of hybrid model based on regression analysis training method and those in ITU-T P.563**

| Predicted result | Training set | | Test set | |
|---|---|---|---|---|
| | P.563 | Hybrid model | P.563 | Hybrid model |
| RMSE | 0.5349 | 0.2332 | 0.4936 | 0.2680 |
| R | 0.6318 | 0.8947 | 0.6991 | 0.8976 |

Optionally, as another embodiment, this embodiment of the present invention may further perform training on the training sample set by using the machine learning training method, to obtain a stable learning network, and the voice quality evaluation apparatus may perform evaluation on the voice quality of the to-be-evaluated voice signal by using the learning network obtained by means of the training. Correspondingly, the determining a voice quality evaluation result of the to-be-evaluated voice signal according to the first voice quality and at least one KPI parameter of a transmission channel of the to-be-evaluated voice signal in S120 includes the following steps:

S123: Input the first voice quality and the at least one KPI parameter of the transmission channel into a learning network obtained by using a machine learning training method, to obtain the voice quality evaluation result of the to-be-evaluated voice signal that is output by using the learning network.

Specifically, the voice quality evaluation apparatus may perform learning training on the training sample set by using the machine learning training method, to obtain the learning network. When new data arrives, a result corresponding to the data may be predicted by using the learning network. The machine learning training method may be a method such as a back propagation (Back Propagation, "BP" for short) network, a multilayer neuron network, Support Vector Machine, or deep learning, which is not limited thereto in this embodiment of the present invention. Sample data in the training sample set may include a MOS of the voice signal obtained according to a signal domain model, the KPI parameter of the transmission channel of the voice signal, and a subjective MOS of the voice signal. Which parameter is specifically included in the at least one KPI parameter may be determined by a user. Correspondingly, the learning network obtained by training may use the first voice quality and the at least one KPI parameter of the transmission channel as input parameters, where the first voice quality may be the MOS value or the quality distortion value; and may use the voice quality evaluation result of the to-be-evaluated voice signal as an output result. Therefore, compared with the regression analysis training method, the voice quality evaluation method based on the machine learning training method does not need to obtain the second voice quality (for example, obtain a quality distortion value according to a packet loss rate) according to a single KPI parameter in the at least one KPI parameter, thereby more simply and quickly predicting the voice signal.

A monolayer neural network method is used as an example. The monolayer neural network uses the ITU-T P.563and an AMR-NB coder, the at least one KPI parameter includes a code rate and a packet loss rate, and a quantity of hidden layer neurons is 140. A stable neural network may be obtained by performing training on a training sample set that includes a specific amount of sample data by using the monolayer neural network method. The neural network includes a large quantity of interconnected neurons, and a function of each neuron is to obtain a scalar result by using an input vector. Specifically, after obtaining an inner product of the input vector and a weight vector, each neuron obtains the scalar result by using a non-linear transfer function. In this embodiment of the present invention, each piece of sample data in the training sample set includes a subjective MOS value, a first MOS value obtained by prediction by using the ITU-T P.563, a corresponding code rate, and a corresponding packet loss rate. Table 3 lists predicted results of the voice signal evaluation method based on the monolayer neural network method according to this embodiment of the present invention and those in the ITU-T P.563. For a meaning of each physical quantity, refer to description of Table 2. It may be learned from Table 3 that, predicted results of a hybrid model based on the monolayer neural network training method are apparently better than predicted results of a pure signal model. In addition, the predicted results of the hybrid model based on the monolayer neural network training method are also slightly better than predicted results of a hybrid model based on the regression analysis training method. However, it should be understood that, this embodiment of the present invention may further use another signal domain prediction method and another machine learning training method, which are not limited in this embodiment of the present invention.

**Table 3 Predicted results of hybrid model based on monolayer neural network training method and those in ITU-T P.563**

| Predicted result | Training set | | Test set | |
|---|---|---|---|---|
| | P.563 | Hybrid model | P.563 | Hybrid model |
| RMSE | 0.5349 | 0.2208 | 0.4936 | 0.2621 |
| R | 0.6318 | 0,9062 | 0.6991 | 0.9054 |

In addition, optionally, when the voice quality evaluation apparatus cannot obtain the foregoing KPI parameter of the transmission channel, the voice quality evaluation apparatus can directly use the foregoing first voice quality as the voice quality evaluation result of the voice signal. Therefore, the voice quality evaluation method in this embodiment of the present invention is compatible with the pure signal domain evaluation method in the prior art, which is not limited thereto in this embodiment of the present invention.

Therefore, according to the voice quality evaluation method in this embodiment of the present invention, a voice quality of a to-be-evaluated voice signal is determined by using the to-be-evaluated voice signal and a KPI parameter of a transmission channel of the to-be-evaluated voice signal, which can improve accuracy of voice quality evaluation, thereby further improving user experience.

In addition, when the quantity of the at least one KPI parameter is more than one, according to the voice quality evaluation method in this embodiment of the present invention, a weight of influence of each of the at least one KPI parameter in the at least one KPI parameter of the transmission channel on the voice quality may be further obtained, to perform quality troubleshooting on the voice signal. Specifically, the regression analysis training method is used as an example. The voice quality evaluation function obtained by training is a function of each KPI parameter of the at least one KPI parameter. Therefore, a current weight of influence of each of the at least one KPI parameter in the at least one KPI parameter on the voice quality may be determined by obtaining a parameter value of each KPI parameter in the at least one KPI parameter and the foregoing voice quality evaluation function with reference to an actual situation. If a current voice quality is lower than an expected value, optimization may be performed on the transmission channel of the voice signal according to the foregoing weight of influence, thereby effectively improving the voice quality.

As shown in FIG. 5, the voice quality evaluation apparatus may perform an analysis and processing on the to-be-evaluated voice signal, for example, the intrusive signal evaluation in FIG. 2 or the non-intrusive signal evaluation in FIG. 3, to obtain the first voice quality of the to-be-evaluated voice signal, and perform fitting on the first voice quality and the KPI parameter of the transmission channel, to obtain the voice quality evaluation result of the to-be-evaluated voice signal. When the voice quality evaluation result is lower than an expected value or a preset threshold, the voice quality evaluation apparatus may perform optimization on the transmission channel according to the voice quality evaluation result and the KPI parameter, to improve the voice quality of the voice signal. However, this embodiment of the present invention is not limited thereto.

Correspondingly, the quantity of the at least one KPI parameter is more than one. As shown in FIG. 6, the method 100 further includes the following steps:

S130: Determine a weight of influence of each KPI parameter in the at least one KPI parameter on a voice quality of the to-be-evaluated voice signal according to the first voice quality and the at least one KPI parameter of the transmission channel.

S140: When the voice quality evaluation result is lower than a preset threshold, optimize the transmission channel of the to-be-evaluated voice signal according to the weight of influence of each KPI parameter on the voice quality.

The voice quality evaluation apparatus may preferentially perform optimization on a KPI parameter with a large weight of influence, or may determine a product by multiplying each KPI parameter by the weight of influence of each KPI parameter on the voice quality, and preferentially perform optimization on a KPI parameter that has a large value of a product. However, this embodiment of the present invention is not limited thereto. Optionally, in another embodiment, the optimizing the transmission channel of the to-be-evaluated voice signal according to the weight of influence of each KPI parameter on the voice quality in S140 includes:

> S141: Sort products according to values of the products, where the products are obtained by respectively multiplying the weights of influence of all the KPI parameters by quality distortion values corresponding to the KPI parameters.
> S142: Preferentially optimize a KPI parameter in the at least one KPI parameter that has a large value of a product in the sorted products.

Specifically, formula (2) is used as an example. When $0.3759 \times d_1 > 0.5244 \times d_2$, it indicates that a product obtained by multiplying a weight of influence of the code rate on the voice quality by a quality distortion value caused by the code rate is greater than a product obtained by multiplying a weight of influence of the packet loss rate on the voice quality and a quality distortion value caused by the packet loss rate. Therefore, when the voice quality evaluation result of the to-be-evaluated voice signal is lower than the expected value, a code rate of the transmission channel may be preferentially optimized, thereby effectively improving the voice quality of the voice signal. However, this embodiment of the present invention is not limited thereto.

Therefore, according to the voice quality evaluation method in this embodiment of the present invention, a voice quality of a to-be-evaluated voice signal is determined by using the to-be-evaluated voice signal and a KPI parameter of a transmission channel of the to-be-evaluated voice signal, which can improve accuracy of voice quality evaluation, thereby further improving user experience. In addition, according to the voice quality evaluation method in this embodiment of the present invention, a weight of influence of each KPI parameter in the KPI parameter of the transmission channel may be further obtained, to perform quality troubleshooting and channel optimization on the voice signal.

It should be understood that, sequence numbers of the foregoing processes do not mean execution sequences. The execution sequences of the processes should be determined according to functions and internal logic of the processes, and shall not be construed as any limitation on the implementation processes of the embodiments of the present invention.

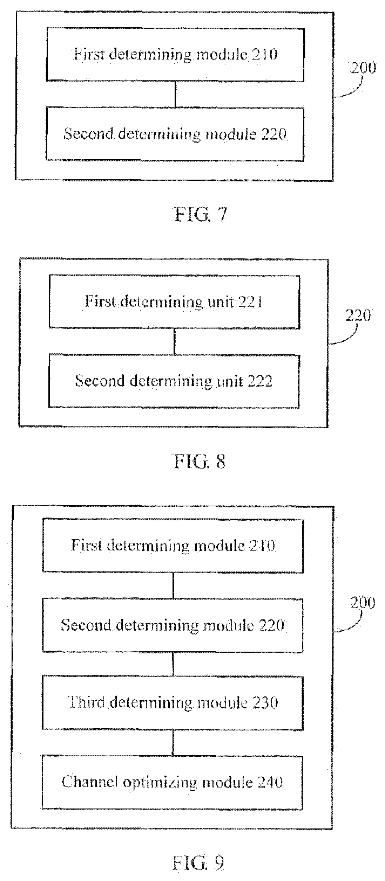

The foregoing describes in detail the voice signal evaluation method according to embodiments of the present invention with reference to FIG. 1 to FIG. 6. The following describes in detail a voice signal evaluation apparatus according to the embodiments of the present invention with reference to FIG. 7 to FIG. 10. It should be noted that, the voice quality evaluation apparatus according to the embodiments of the present invention may be used to implement the voice quality evaluation method in the foregoing method embodiments, and all the foregoing methods may be applied to the following apparatus embodiments.

FIG. 7 shows a schematic block diagram of a voice quality evaluation apparatus 200 according to an embodiment of the present invention. As shown in FIG. 7, the voice quality evaluation apparatus 200 includes the following modules:

> a first determining module 210, configured to determine a first voice quality of a to-be-evaluated voice signal by performing processing and an analysis on the to-be-evaluated voice signal, where the first voice quality includes a quality distortion value and/or a MOS value; and

a second determining module 220, configured to determine a voice quality evaluation result of the to-be-evaluated voice signal according to the first voice quality determined by the first determining module 210 and at least one key performance indicator KPI parameter of a transmission channel of the to-be-evaluated voice signal.

Therefore, according to the voice quality evaluation apparatus in this embodiment of the present invention, a voice quality of a to-be-evaluated voice signal is determined by using the to-be-evaluated voice signal and a KPI parameter of a transmission channel of the to-be-evaluated voice signal, which can improve accuracy of voice quality evaluation, thereby further improving user experience.

Optionally, as shown in FIG. 8, the second determining module 220 includes the following modules:

a first determining unit 221, configured to determine at least one second voice quality of the to-be-evaluated voice signal according to the at least one KPI parameter of the transmission channel of the to-be-evaluated voice signal; and

a second determining unit 222, configured to determine the voice quality evaluation result of the to-be-evaluated voice signal according to the first voice quality determined by the first determining module 210, the at least one second voice quality determined by the first determining unit 221, and a voice quality evaluation function obtained by using a regression analysis training method, where the voice quality evaluation function uses the first voice quality and the at least one second voice quality as inputs and uses the voice quality evaluation result as an output.

Optionally, in another embodiment, the voice quality evaluation function according to which the second determining unit 222 determines the voice quality evaluation result of the to-be-evaluated voice signal has the following form:

$$Y = B_{1xN} \times X_{Nx1} + t$$

Y is the voice quality evaluation result, $B_{1xN}$ and t are respectively a constant matrix and a constant, and $X_{Nx1}$ = $[x_{00} ... x_{i0} ... x_{N0}]^T$ is a quality distortion matrix, where the element $x_{00}$ is a quality distortion value obtained according to a signal domain evaluation method, the element $x_{i0}$ is a quality distortion value obtained according to the KPI parameter of the transmission channel, and $1 \leq i \leq N$.

Optionally, in another embodiment, the second determining module 220 is specifically configured to input the first voice quality and the at least one KPI parameter of the transmission channel into a learning network obtained by using a machine learning training method, to obtain the voice quality evaluation result of the to-be-evaluated voice signal that is output by using the learning network.

Optionally, in another embodiment, a quantity of the at least one KPI parameter of the transmission channel is more than one. Correspondingly, as shown in FIG. 9, the voice quality evaluation apparatus 200 further includes the following modules:

a third determining module 230, configured to determine a weight of influence of each of the at least one KPI parameter in the at least one KPI parameter of the transmission channel on a voice quality of the to-be-evaluated voice signal according to the first voice quality determined by the first determining module 210 and the at least one KPI parameter of the transmission channel; and

a channel optimizing module 240, configured to: when the voice quality evaluation result determined by the second determining module 220 is lower than a preset threshold, optimize the transmission channel of the to-be-evaluated voice signal according to the weight of influence of each KPI parameter that is determined by the third determining module 230 on the voice quality.

The preset threshold may depend on human auditory experience; however, this embodiment of the present invention is not limited thereto.

Optionally, in another embodiment, the channel optimizing module 240 includes the following units:

a sorting unit 241, configured to sort products according to values of the products, where the products are obtained by respectively multiplying the weights of influence of all the KPI parameters by quality distortion values corresponding to the KPI parameters; and

an optimizing unit 242, configured to preferentially optimize a KPI parameter in the at least one KPI parameter that has a large value of a product in the products sorted by the sorting unit 241.

The voice quality evaluation apparatus 200 according to this embodiment of the present invention may correspond to a voice quality evaluation apparatus in a voice signal evaluation method according to an embodiment of the present invention, and the foregoing and other operations and/or functions of the modules in the voice signal evaluation apparatus 200 are respectively used to implement corresponding procedures of the methods in FIG. 1 to FIG. 6. For brevity, details are not described herein again.

Therefore, according to the voice quantity evaluation apparatus in this embodiment of the present invention, a voice quality of a to-be-evaluated voice signal is determined by using the to-be-evaluated voice signal and a KPI parameter of a transmission channel of the to-be-evaluated voice signal, which can improve accuracy of voice quality evaluation, thereby further improving user experience. In addition, according to the voice quality evaluation method in this embodiment of the present invention, a weight of influence of each KPI parameter in the at least one KPI parameter of the transmission channel may be further obtained, to perform quality troubleshooting and channel optimization on the voice signal.

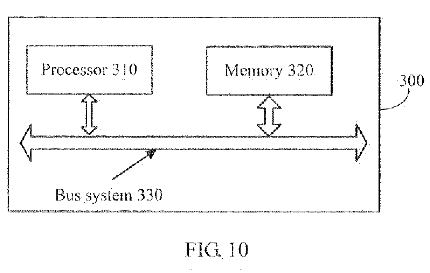

FIG. 10 shows a schematic block diagram of a voice quality evaluation apparatus 300 according to another embodiment of the present invention. The voice quality evaluation apparatus 300 includes: a processor 310, a memory 320, and a bus system 330. The processor 310 and the memory 320 are connected by using the bus system 330. The memory 320 is configured to store an instruction. The processor 310 invokes, by using the bus system 330, the instruction stored in the memory 320, and is configured to: determine a first voice quality of a to-be-evaluated voice signal by performing processing and an analysis on the to-be-evaluated voice signal, where the first voice quality includes a quality distortion value and/or a MOS value; and determine a voice quality evaluation result of the to-be-evaluated voice signal according to the first voice quality and at least one key performance indicator KPI parameter of a transmission channel of the to-be-evaluated voice signal.

Therefore, according to the voice quality evaluation apparatus in this embodiment of the present invention, a voice quality of a to-be-evaluated voice signal is determined by using the to-be-evaluated voice signal and a KPI parameter of a transmission channel of the to-be-evaluated voice signal, which can improve accuracy of voice quality evaluation, thereby further improving user experience.

It should be understood that, in this embodiment of the present invention, the processor 310 may be a central processing unit (Central Processing Unit, "CPU" for short), and the processor 310 may also be another general purpose processor, a digital signal processor (DSP), an application-specific integrated circuit (ASIC), a field-programmable gate array (FPGA) or another programmable logical device, a discrete gate or a transistor logic device, a discrete hardware component, or the like. The general purpose processor may be a microprocessor or the processor may also be any conventional processor and the like.

The memory 320 may include a read-only memory and a random access memory, and provides an instruction and data to the processor 310. A part of the memory 320 may further include a non-volatile random access memory. For example, the memory 320 may further store information about a device type.

In addition to a data bus, the bus system 330 may further include a power bus, a control bus, a status signal bus, and the like. However, for clear description, various types of bus in the figure are marked as the bus system 330.

During an implementation process, the steps in the foregoing method may be completed by using an integrated logic circuit of hardware in the processor 310 or an instruction in a form of software. Steps of the methods disclosed with reference to the embodiments of the present invention may be directly executed and completed by means of a hardware processor, or may be executed and completed by using a combination of hardware and software modules in the processor. The software module may be located in a mature storage medium in the field, such as a random access memory, a Hash memory, a read-only memory, a programmable read-only memory, an electrically-erasable programmable memory, or a register. The storage medium is located in the memory 320, and the processor 310 reads information in the memory 320 and completes the steps in the foregoing methods in combination with hardware of the processor 310. To avoid repetition, details are not further described herein.

Optionally, the processor 310 is specifically configured to determine at least one second voice quality of the to-be-evaluated voice signal according to the at least one KPI parameter of the transmission channel of the to-be-evaluated voice signal; and determine the voice quality evaluation result of the to-be-evaluated voice signal according to the first voice quality, the at least one second voice quality, and a voice quality evaluation function obtained by using a regression analysis training method, where the voice quality evaluation function uses the first voice quality and the at least one second voice quality as inputs and uses the voice quantity evaluation result as an output.

Optionally, in another embodiment, the voice quality evaluation function according to which the processor 310 determines the voice quality evaluation result of the to-be-evaluated voice signal has the following form:

$$Y = B_{1xN} \times X_{Nx1} + t$$

Y is the voice quality evaluation result, $B_{1xN}$ and t are respectively a constant matrix and a constant, and $X_{Nx1}$

$= [x_{00} \ldots x_{i0} \ldots x_{N0}]^T$ is a quality distortion matrix, where the element $x_{00}$ is a quality distortion value obtained according to a signal domain evaluation method, the element $x_{i0}$ is a quality distortion value obtained according to the KPI parameter of the transmission channel, and $1 \leq i \leq N$.

Optionally, in another embodiment, the processor 310 is specifically configured to input the first voice quality and the at least one KPI parameter of the transmission channel into a learning network obtained by using a machine learning training method, to obtain the voice quality evaluation result of the to-be-evaluated voice signal that is output by using the learning network.

Optionally, in another embodiment, a quantity of the at least one KPI parameter of the transmission channel is more than one; the processor 310 is further configured to determine a weight of influence of each or the at least one KPI parameter in the at least one KPI parameter of the transmission channel on a voice quality of the to-be-evaluated voice signal according to the first voice quality and the at least one KPI parameter of the transmission channel; and when the voice quality evaluation result is lower than a preset threshold, optimize the transmission channel of the to-be-evaluated voice signal according to the weight of influence of each KPI parameter on the voice quality.

Optionally, in another embodiment, the processor 310 is further configured to sort products according to values of the products, where the products are obtained by respectively multiplying the weights of influence of all the KPI parameters by quality distortion values corresponding to the KPI parameters; and preferentially optimize a KPI parameter in the at least one KPI parameter that has a large value of a product in the sorted products.

The voice quality evaluation apparatus 300 according to this embodiment of the present invention may correspond to a voice quality evaluation apparatus in a voice signal evaluation method according to an embodiment of the present invention, and the foregoing and other operations and/or functions of the modules in the voice signal evaluation apparatus 300 are respectively used to implement corresponding procedures of the methods in FIG. 1 to FIG. 6. For brevity, details are not further described herein.

Therefore, according to the voice quality evaluation apparatus in this embodiment of the present invention, a voice quality of a to-be-evaluated voice signal is determined by using the to-be-evaluated voice signal and a KPI parameter of a transmission channel of the to-be-evaluated voice signal, which can improve accuracy of voice quality evaluation, thereby further improving user experience. In addition, according to the voice quality evaluation method in this embodiment of the present invention, a weight of influence of each KPI parameter in the at least one KPI parameter of the transmission channel may be further obtained, to perform quality troubleshooting and channel optimization on the voice signal.

It should be understood that, the term "and/or" in this embodiment of the present invention describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

A person of ordinary skill in the art may be aware that, in combination with the examples described in the embodiments disclosed in this specification, method steps and units may be implemented by electronic hardware, computer software, or a combination thereof. To clearly describe the interchangeability between the hardware and the software, the foregoing has generally described steps and compositions of each embodiment according to functions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments of the present invention.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementation manners of the present invention, but are not intended to limit the protection scope of the present invention. Any modification or replacement readily figured out by a person skilled in the art within the technical scope disclosed in the present invention shall fall within the protection scope of the present invention. Therefore, the protection scope of the present invention shall be subject to the protection scope of the claims.

**Claims**

1.  A voice quality evaluation method, comprising:

    determining a first voice quality of a to-be-evaluated voice signal by processing and analyzing the to-be-evaluated voice signal, wherein the first voice quality comprises a quality distortion value or a MOS value or both; and
    determining a voice quality evaluation result of the to-be-evaluated voice signal according to the first voice quality and at least one key performance indicator KPI parameter of a transmission channel of the to-be-evaluated voice signal.

2.  The method according to claim 1, wherein the determining a voice quality evaluation result of the to-be-evaluated voice signal according to the first voice quality and at least one KPI parameter of a transmission channel of the to-be-evaluated voice signal comprises:

    determining at least one second voice quality of the to-be-evaluated voice signal according to the at least one KPI parameter of the transmission channel of the to-be-evaluated voice signal; and
    determining the voice quality evaluation result of the to-be-evaluated voice signal according to the first voice quality, the at least one second voice quality, and a voice quality evaluation function obtained by using a regression analysis training method, wherein the voice quality evaluation function uses the first voice quality and the at least one second voice quality as inputs and uses the voice quality evaluation result as an output.

3.  The method according to claim 2, wherein the voice quality evaluation function has the following form:

$$Y = B_{1 \times N} \times X_{N \times 1} + t,$$

    wherein
    Y is the voice quality evaluation result, $B_{1 \times N}$ and t are respectively a constant matrix and a constant, and $X_{N \times 1} = [x_{00} \ldots x_{i0} \ldots x_{N0}]^T$ is a quality distortion matrix, wherein the element $x_{00}$ is a quality distortion value obtained according to a signal domain evaluation method, the element $x_{i0}$ is a quality distortion value obtained according to the KPI parameter of the transmission channel, and $1 \leq i \leq N$.

4.  The method according to claim 1, wherein the determining a voice quality evaluation result of the to-be-evaluated voice signal according to the first voice quality and at least one KPI parameter of a transmission channel of the to-be-evaluated voice signal comprises:

    inputting the first voice quality and the at least one KPI parameter of the transmission channel into a learning network obtained by using a machine learning training method, to obtain the voice quality evaluation result of the to-be-evaluated voice signal that is output by using the learning network.

5.  The method according to any one of claims 1 to 4, wherein a quantity of the at least one KPI parameter of the transmission channel is more than one; and
the method further comprises:

determining a weight of influence of each of the at least one KPI parameter in the at least one KPI parameter on a voice quality of the to-be-evaluated voice signal according to the first voice quality and the at least one KPI parameter of the transmission channel; and
when the voice quality evaluation result is lower than a preset threshold, optimizing the transmission channel of the to-be-evaluated voice signal according to the weight of influence of each KPI parameter on the voice quality.

6. The method according to claim 5, wherein the optimizing the transmission channel of the to-be-evaluated voice signal according to the weight of influence of each KPI parameter on the voice quality comprises:

sorting products according to values of the products, wherein the products are obtained by respectively multiplying the weights of influence of all the KPI parameters by quality distortion values corresponding to the KPI parameters; and
preferentially optimizing a KPI parameter in the at least one KPI parameter that has a large value of a product in the sorted products.

7. A voice quality evaluation apparatus, comprising:

a first determining module, configured to determine a first voice quality of a to-be-evaluated voice signal by performing processing and an analysis on the to-be-evaluated voice signal, wherein the first voice quality comprises a quality distortion value and/or a MOS value; and
a second determining module, configured to determine a voice quality evaluation result of the to-be-evaluated voice signal according to the first voice quality determined by the first determining module and at least one key performance indicator KPI parameter of a transmission channel of the to-be-evaluated voice signal.

8. The apparatus according to claim 7, wherein the second determining module comprises:

a first determining unit, configured to determine at least one second voice quality of the to-be-evaluated voice signal according to the at least one KPI parameter of the transmission channel of the to-be-evaluated voice signal; and
a second determining unit, configured to determine the voice quality evaluation result of the to-be-evaluated voice signal according to the first voice quality determined by the first determining module, the at least one second voice quality determined by the first determining unit, and a voice quality evaluation function obtained by using a regression analysis training method, wherein the voice quality evaluation function uses the first voice quality and the at least one second voice quality as inputs and uses the voice quality evaluation result as an output.

9. The apparatus according to claim 8, wherein the voice quality evaluation function has the following form:

$$Y = B_{1xN} \times X_{Nx1} + t,$$

wherein
Y is the voice quality evaluation result, $B_{1xN}$ and t are respectively a constant matrix and a constant, and $X_{Nx1} = [x_{00} \dots x_{i0} \dots x_{N0}]^T$ is a quality distortion matrix, wherein the element $x_{00}$ is a quality distortion value obtained according to a signal domain evaluation method, the element $x_{i0}$ is a quality distortion value obtained according to the KPI parameter of the transmission channel, and $1 \le i \le N$.

10. The apparatus according to claim 9, wherein the second determining module is specifically configured to input the first voice quality and the at least one KPI parameter of the transmission channel into a learning network obtained by using a machine learning training method, to obtain the voice quality evaluation result of the to-be-evaluated voice signal that is output by using the learning network.

11. The apparatus according to any one of claims 7 to 10, wherein a quantity of the at least one KPI parameter of the transmission channel is more than one; and
the apparatus further comprises:

a third determining module, configured to separately determine a weight of influence of each KPI parameter in the at least one KPI parameter on a voice quality of the to-be-evaluated voice signal according to the first voice quality determined by the first determining module and the at least one KPI parameter of the transmission channel; and

a channel optimizing module, configured to: when the voice quality evaluation result determined by the second determining module is lower than a preset threshold, optimize the transmission channel of the to-be-evaluated voice signal according to the weight of influence of each KPI parameter that is determined by the third determining module on the voice quality.

12. The apparatus according to claim 11, wherein the channel optimizing module comprises:

a sorting unit, configured to sort products according to values of the products, wherein the products are obtained by respectively multiplying the weights of influence of all the KPI parameters by quality distortion values corresponding to the KPI parameters; and

an optimizing unit, configured to preferentially optimize a KPI parameter in the at least one KPI parameter that has a large value of a product in the products sorted by the sorting unit.

Determine a first voice quality of a to-be-evaluated voice signal by performing processing and an analysis on the to-be-evaluated voice signal, where the first voice quality includes a quality distortion value and/or a mean opinion score MOS value ⟩ 110

Determine a voice quality evaluation result of the to-be-evaluated voice signal according to the first voice quality and at least one key performance indicator KPI parameter of a transmission channel of the to-be-evaluated voice signal ⟩ 120

FIG. 1

KPI parameter

To-be-evaluated voice signal

Initial voice signal of the to-be-evaluated voice signal

Intrusive signal evaluation

First voice quality

Fitting

Voice quality evaluation result

FIG. 2

KPI parameter

To-be-evaluated voice signal

Nonintrusive signal evaluation

First voice quality

Fitting

Voice quality evaluation result

FIG. 3

Determine at least one second voice quality of a to-be-evaluated voice signal according to at least one KPI parameter of a transmission channel of the to-be-evaluated voice signal — 121

Determine a voice quality evaluation result of the to-be-evaluated voice signal according to a first voice quality, the at least one second voice quality, and a voice quality evaluation function obtained by using a regression analysis training method, where the voice quality evaluation function uses the first voice quality and the at least one second voice quality as inputs and uses the voice quality evaluation result as an output — 122

FIG. 4

KPI parameter

To-be-evaluated voice signal → Voice signal evaluation → First voice quality → Fitting → Voice quality evaluation result → Transmission channel optimization

FIG. 5

Separately determine a weight of influence of each KPI parameter in at least one KPI parameter on voice quality of a to-be-evaluated voice signal according to a first voice quality and the at least one KPI parameter of a transmission channel — 130

When a voice quality evaluation result is lower than a preset threshold, optimize a transmission channel of the to-be-evaluated voice signal according to the weight of influence of each KPI parameter on the voice quality — 140

FIG. 6

First determining module 210

Second determining module 220

200

FIG. 7

First determining unit 221

Second determining unit 222

220

FIG. 8

First determining module 210

Second determining module 220

Third determining module 230

Channel optimizing module 240

200

FIG. 9

| Processor 310 | | Memory 320 |

300

Bus system 330

FIG. 10

## INTERNATIONAL SEARCH REPORT

| International application No. |
| --- |
| PCT/CN2014/076779 |

### A. CLASSIFICATION OF SUBJECT MATTER

G10L 11/00 (2006.01) i

According to International Patent Classification (IPC) or to both national classification and IPC

### B. FIELDS SEARCHED

Minimum documentation searched (classification system followed by classification symbols)

G10L; H04L; H04Q; H04N

Documentation searched other than minimum documentation to the extent that such documents are included in the fields searched

Electronic data base consulted during the international search (name of data base and, where practicable, search terms used)

CNTXT; CPRS; CNKI; VEN: voice, speech, quality, assess, evaluate, distort, mean opinion score, MOS, key performance index, kpi, coder, encoder, type, coding rate, packet loss, delay jitter, regression, function, machine, neural net, neural network, train, artificial intelligence, transport channel, transmission channel, optimization, weight, adjust, mobile, cellphone, call, communicate, mobile communication

### C. DOCUMENTS CONSIDERED TO BE RELEVANT

| Category* | Citation of document, with indication, where appropriate, of the relevant passages | Relevant to claim No. |
| --- | --- | --- |
| X | CN 103152599 A (ZHEJIANG UNIVERSITY) 12 June 2013 (12.06.2013) description, paragraphs [0022]-[0032] , and figure 3 | 1, 2, 7, 8 |
| Y | CN 103152599 A (ZHEJIANG UNIVERSITY) 12 June 2013 (12.06.2013) description, paragraphs [0022]-[0032], and figure 3 | 5, 11 |
| X | CN 101188847 A (CHINA INFORMATION TECHNOLOGY DESIGNING & CONSULTING INSTITUTE) 28 May 2008 (28.05.2008) description, page 3, and figures 1-3 | 1, 4, 7, 10 |
| Y | CN 101188847 A (CHINA INFORMATION TECHNOLOGY DESIGNING & CONSULTING INSTITUTE) 28 May 2008 (28.05.2008) description, page 3, and figures 1-3 | 5, 11 |

☒ Further documents are listed in the continuation of Box C.　　☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
| --- | --- |
| 04 August 2014 | 26 August 2014 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>　　　　LI, Xiaohui<br><br>Telephone No. (86-10) 62085876 |

Form PCT/ISA /210 (second sheet) (July 2009)

**INTERNATIONAL SEARCH REPORT**

| | International application No. |
|---|---|
| | PCT/CN2014/076779 |

C (Continuation). DOCUMENTS CONSIDERED TO BE RELEVANT

| Category* | Citation of document, with indication, where appropriate, of the relevant passages | Relevant to claim No. |
|---|---|---|
| Y | CN 101051942 A (YIYANGXINTONG SOFTWARE INST CO., LTD) 10 October 2007 (10.10.2007) description, pages 7and 8 , and figures 1 and 2 | 5,11 |
| A | CN 101727896 A (CHUNGHWA TELECOM CORP.) 09 June 2010 (09.06.2010) the whole document | 1-12 |
| A | US 8140069 B1 (LALL ABHISHEK et al.) 20 March 2012 (20.03.2012) the whole document | 1-12 |
| A | US 7327985B2 (ERICASSON TELEFON AB L M) 05 February 2008 (05.02.2008) the whole document | 1-12 |
| A | WEI, Li et al. "A study of evaluation system of TD-SCDMA custom perception" MOBILE COMMUNICATIONS, no.Z1, 31 December 2011 (31.12.2011), ISSN: 1006-1010, pages 58-65 | 1-12 |

Form PCT/ISA /210 (continuation of second sheet) (July 2009)

**INTERNATIONAL SEARCH REPORT**
Information on patent family members

International application No.

PCT/CN2014/076779

| Patent Documents referred in the Report | Publication Date | Patent Family | Publication Date |
|---|---|---|---|
| CN 103152599 A | 12 June 2013 | None | |
| CN 101188847 A | 28 May 2008 | US 2004186716A1 | 23 September 2004 |
| CN 101051942 A | 10 October 2007 | CN 101727896B | 02 November 2011 |
| CN 101727896 A | 09 June 2010 | None | |
| US 8140069 B1 | 20 March 2012 | None | |
| US 7327985 B2 | 05 February 2008 | CN 100531066C | 19 August 2009 |

Form PCT/ISA /210 (patent family annex) (July 2009)

**EP 3 054 447 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201310462268